# EUROPÄISCHE PATENTANMELDUNG

(11) **EP 2 481 648 A2**
(43) Veröffentlichungstag der Anmeldung: **01.08.2012**
(21) Anmeldenummer: 12000509.5
(22) Anmeldetag: 26.01.2012
(51) Int. Cl.: B60S 1/66

(54) **Schnee- und Eisräumvorrichtung für Kraftfahrzeuge**

(30) Priorität: 26.01.2011 DE 102011009452
(71) Anmelder: Werner, Daniel, 61440 Oberursel (DE)
(72) Erfinder: Werner, Daniel, 61440 Oberursel (DE)
(74) Vertreter: Erb, Henning

(57) **Zusammenfassung**

Eine Schnee- und Eisräumvorrichtung dient der Vereinfachung der Reinigung einer Dachfläche von Kraftfahrzeugen im Winter. Hierzu ist vorgesehen, dass auf der Dachfläche eines Kraftfahrzeuges (1) ein Rollo (4) vorgesehen ist, dessen Behang (11) über der Dachfläche des fahrzeuges (11) ausfahrbar ist, wobei das Rollo zum Reinigen über die Dachkante hinaus ausziehbar ist.

## Beschreibung

Die vorliegende Erfindung befasst sich mit einer Schnee- und Eisräumvorrichtung für die Dachfläche von Kraftfahrzeugen, insbesondere Nutzfahrzeugen.

Im Winter kommt es immer wieder dazu, dass sich durch Schneefall oder gefrierenden Regen Schnee- oder Eisschichten auf den Dächern von Fahrzeugen bilden. Werden diese Schichten nicht entfernt, stellen sie eine Gefährdung für andere Verkehrsteilnehmer dar, da sie sich während der Fahrt lösen und unkontrolliert von Dach fliegen. Die Straßenverkehrsordnung schreibt daher zwingend vor, dass die Dachflächen vor Fahrtantritt von Schnee und Eis zu befreien sind, Verstöße werden polizeilich geahndet.

Bei Nutzfahrzeugen, wie 2.B. Lastkraftwagen, Anhängen, Sattelaufliegern oder Omnibussen, sind die Dachflächen aber in der Regel nicht ohne Weiteres erreichbar, so dass sich die Fahrzeugführer mit Leiter und Besen behelfen müssen, um die Dachfläche zu säubern. Neben dem erheblichen Zeitaufwand, der den Betriebsablauf stört und unmittelbare Kosten verursacht, ist das Reinigen der meist glatten Dachflächen auch nicht ungefährlich, da ein Ausrutschen einen Sturz vom Fahrzeugdach bedeuten kann. Es gibt zwar stationäre Hilfseinrichtungen, diese stehen aber nicht immer zur Verfügung.

Die Aufgabe der vorliegenden Erfindung besteht darin, eine Vorrichtung zu schaffen, die es dem Fahrzeugführer erlaubt, das Fahrzeugdach schnell und sicher von Eis und Schnee zu befreien, ohne dass er auf das Fahrzeugdach klettern muss.

Erfindungsgemaß wird die Aufgabe dadurch gelöst, dass bei einer Schnee- und Eisräumvorrichtung ein Rollo vorgesehen ist, dessen Behang über der Dachfläche des Kraftfahtzeuges ausfahrbar ist.

Der Fahrzeugführer hat die Möglichkeit, die Dachfläche des Fahrzeuges mit dem ausgefahrenen Behang des Rollos zu bedecken. Kommt es zu Niederschlag in Form von Schneefall oder gefrierendem Regen, sammeln sich Schnee und Eis in der Folge nicht auf dem Dach des Fahrzeuges, sondern auf dem Behang des Rollos an. Der Fahrer kann dann bei Dienstantritt den Behang des Rollos je nach Lage der Wickelvorrichtung weiter ausfahren oder einfahren, so dass der abgelagerte Schnee durch das Verstellen vom Fahrzeugdach bewegt wird und zu Boden fallen kann. Der Vorgang dauert nur wenige Minuten und verzögert die Betriebläufe praktisch nicht.

Vorzugsweise weist das Rollo eine wickelvorrichtung auf, deren Drehachse parallel zur Fahrzeuglängsrichtung ausgerichtet ist. Diese Anordnung ist bevorzugt, weil die Rollos dann günstiger im Fahrtwind liegen und nur kleinere Ausfahrlängen notwandig sind.

Vorzugsweise ist das wenigstens eine Rollo mit einer Rückholfeder versehen, die bestrebt ist, den Behang des Rollos in eine eingerollte Position zurückzuziehen.

Diese Ausbildung vereinfacht die Handhabung, da das Rollo nach der Verwendung selbsttätig in seine Ausgangsposition zurückkehren kann. Ein Gegenzugantrieb oder dergleichen zum Einholen des 3e-hangs ist nicht erforderlich.

In einer weiteren bevorzugten Ausführungsform der Erfindung ist vorgesehen, dass die Ausfahrlänge des Behangs des wenigstens einen Rollos wenigstens das Doppelte der von ihm bedeckbaren Dachbreite beträgt.

Bei dieser Ausführungsform wird das wenigstens eine Rollo halb ausgefahren, um die Dachfläche vorsorglich zu bedecken, und dann nach Ausbildung einer Schnee- oder Eisschicht ganz ausgezogen, so dass die Schicht vollständig von der Dachfläche bewegt werden kann.

Eine besonders bevorzugte Ausführungsform der Erfindung sieht vor, dass wenigstens zwei Rollos mittig auf der Dachfläche des Kraftfahrzeuges mit entgegengesetzter Ausfahrrichtung vorgesehen sind.

Diese Lösung bietet den Vorteil, dass die Vorrichtung an einer Stelle des Fahrzeugdaches angeordnet ist, wo sie praktisch nicht stört. Durch die Zweiteilung der Vorrichtung über die Dachbreite, ist auch nur eine kleinere Ausfahrlänge eines Rollos notwendig, so dass wegen des entsprechend verminderten Wickeldurchmessers die Vorrichtung flacher baut als bei einem einzigen Rollo, das die komplette Fahrzeugbreite abdecken muss. Auch die auftretenden Kräfte an einem Rollo werden dadurch entsprechend verkleinert.

Bei langen Fahrzeugdächern können selbstverständlich auch zwei oder mehr Rollos nebeneinander über die Länge des Daches vorgesehen sein, bei paarweiser Anordnung in Fahrzeugmitte dann entsprechend vier, sechs oder mehr Rollos.

In einer weiteren bevorzugten Ausgestaltung der Erfindung sind an den seitlichen Dachkanten Umlenkeinrichtungen vorgesehen, die den Behang über die Kanten führen.

Solche Umlenkeinrichtungen sorgen dafür, dass der Behang des Rollos mit niedrigem Kraftaufwand über die seitliche Dachkante, gezogen werden kann, damit die Schnee- oder Eisschicht herabfallen kann. Sie verhindern auch, dass der Behang durch spitze oder scharfe Stellen oder durch Unebenheiten bei der Nutzung beschädigt wird.

Derartige Umlenkeinrichtungen können Umlenkrollen oder -walzen vorsehen, im einfachsten Fall genügen aber auch abgerundete Gleitflächen, über die der Behang beim Verstellen reibungsarm gleiten kann.

Da das Rollo selbst in der Regel keine Sperre aufweist, die das Einrollen unter der Federwirkung verhindert, ist es von Vorteil, wenn ein am freien Ende des Rollobehangs vorgesehener Stab unmittelbar mittels eines an ihm vorgesehenen Seils an einem Haken am Kraftfahrzeug wenigstens in einer Position im Bereich der Dachkante arretierbar ist. In dieser bereits weiter oben angesprochenen Stellung deckt der Behang dann die Dachfläche ab. Arretierungen in weiteren Positionen sind nicht unbedingt notwendig, da nach dem vollständigen Ausziehen und Freimachen des Behangs dieser vor Fahrtbeginn dann unmittelbar ganz eingerollt wird, lediglich bei hartnackig haftenden Eisschichten kann es zweckmäßig sein, den Behang auch in der ganz ausgezogenen Stellung zu arretieren, um seine Oberfläche manuell zu reinigen, wenn er an der Seite der Fahrzeuges nach unten gezogen ist. Ein Haken in der eingerollten Stellung, der z.B. ein Zugseil an einer definierten Stelle hält, kann ebenfalls vorgesehen sein.

Die Verstellung des Rollos erfolgt im einfachsten Fall manuell, kann aber selbstverständlich auch motorisch durchgeführt werden.

Der Behang des Rollos ist so ausgelegt, dass er den mechanischen Belastungen widersteht, was sich durch Planen, Textilgewebe oder Mischformen erreichen lässt. Eine Antihaftbeschichtung wenigstens auf der Seite, auf der sich die Schnee- oder Eisschicht ausbildet, kann das Lösen während der Reinigung vereinfachen.

Vorzugsweise ist das wenigstens eine Rollo mit einer Blende oder mittels eines Gehäuses abgedeckt, um es im nicht genutzten Zustand vor Verschmutzung zu schützen. Verbessert werden kann die Schutzwirkung eines Gehäuses dadurch, dass der Stab des Rollos im eingefahrenen Zustand eine Gehäuseöffnung verschließt, durch die der Behang geführt ist. Eine Abstreifvorrichtung an der Gehäuseöffnung kann verhindern, dass noch anhaftende Schnee- und Eisreste in das Gehäuse transportiert werden und dort eventuell für Funktionsstörungen sorgen.

Eine weitere Ausgestaltung der Erfindung kann vorsehen, dass der Stab mit einer Schneeräumvorrichtung auf der Dachfläche aufliegt.

Eine solch Vorrichtung kann dann von Vorteil sein, wenn der Fahrzeugführer vergessen hat, das Rollo rechtzeitig auszufahren und die Dachfläche zu bedecken.

Nachfolgend wird anhand der beigefügten Zeichnungen näher auf ein Ausführungsbeispiel der Erfindung eingegangen. Es zeigen:
- Fig. 1: eine Rückansicht eines Lkw's mit zwei auf dem Dach in Fahrtlängsrichtung montierten Rollos,
- Fig. 2: eine seitenansicht des Lkw's nach Fig. 1;
- Fig. 3: eine Draufsicht auf den Lkw nach Fig. 1.;
- Fig. 4: eine Teilansicht mit dem Rollo in Ruhestellung;
- Fig. 5: eine Teilansicht mit in Bereitschaftsstellung befindlichem Rollo;
- Fig. 6: eine Teilansicht mit schneebedecktem Rollo;
- Fig. 7: eine Teilansicht mit über die Dachkante gezogener Schneelast.

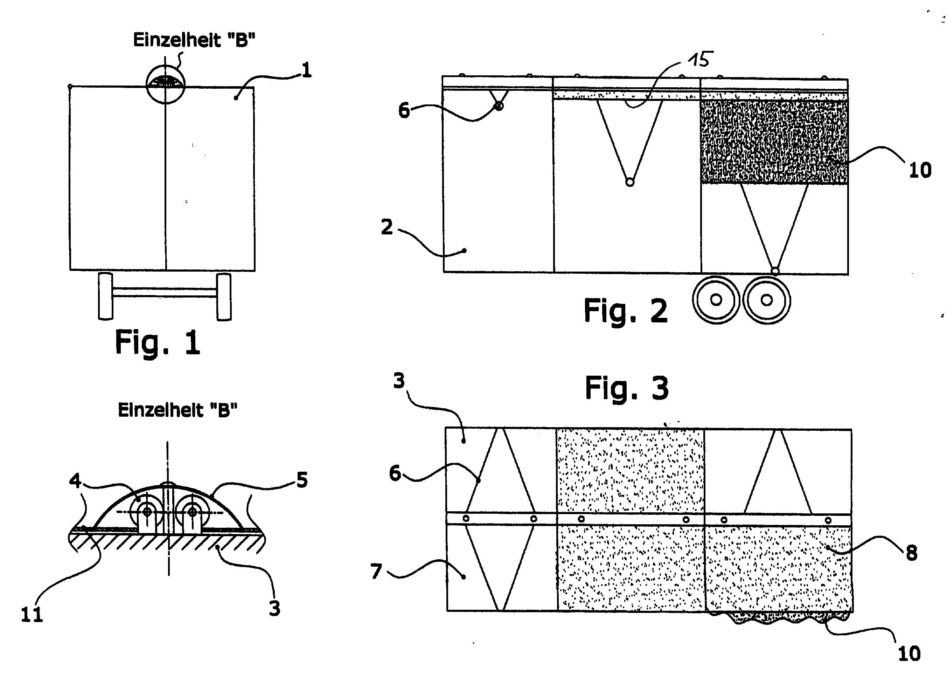

Die Abbildungen 1 bis 7 erläutern das Grundprinzip der Erfindung. Wie aus der Rückansicht eines Lastkraftwagens oder eins Anhängers zu erkennen ist, sind mittig auf der Dachfläche 3 eines Lastwagens 1 in Längsrichtung zwei Rollos 4 angebracht, deren Ausfahrrichtungen entgegengesetzt liegen, so dass jeweils ein Rollo 4 zur Bedeckung einer Hälfte der Dachfläche 3 geeignet ist. Eine Firstabdeckung 5 (siehe Einzelheit "B") dient dem Schutz der beiden Rollos vor Verschmutzung.

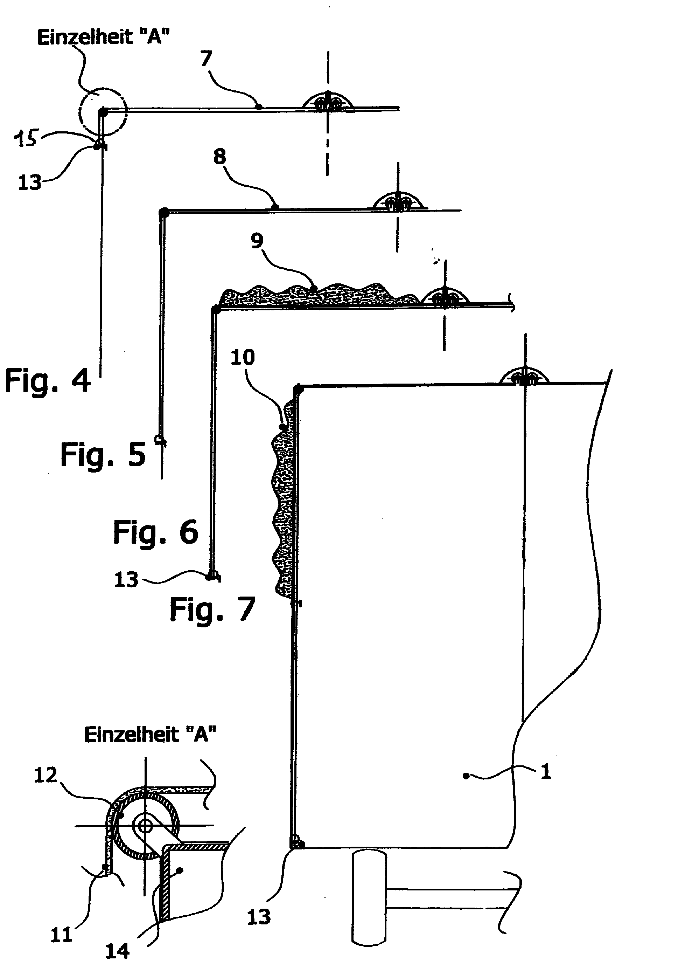

Die Rollos 4 verfügen wie handelsübliche Rollos auch über eine Rückholvorrichtung, die mit einer Torsionsfeder oder dergleichen arbeitet. Diese ist bestrebt, die Rollos immer in die eingefahrene Stellung zurückzuziehen, die in Fig. 1 und 4 und teilweise in Fig. 2 und 3 gezeigt ist. Eine Sperrvorrichtung, wie sie bei handelsüblichen Springrollos vorgesehen ist, entfällt, so dass ein Rollobehang 11 des Rollos 4 immer unter der Zuglast der eingebauten Torsionsfeder steht.

Über die Länge der Dachfläche sind bei dem gezeigten Ausführungsbeispiel drei Rollos hintereinander angeordnet, d. h. bedingt durch die doppelte Anordnung gemäß Fig. 1. sind insgesamt sechs Rollos 4 notwendig, um die Dachfläche 3 des Lkw's zu bedecken. Der Grund für diese Unterteilung in Einzelrollos besteht darin, dass das Gewicht der zu erwartenden Schnee- oder Eislast auf einer ausgezogenen Rollofläche 8 begrenzt werden soll.

Im Bereich einer Dachkante ist ein Haken 13 (siehe Fig. 4) vorgesehen, an welchem ein mit einem Endstab 15, der am freien Ende des Behangs vorgesehen ist, verbundenes Zugseil 6 festlegbar ist. Die Ruhestellung, in welcher der Behang 11 vollständig aufgerollt ist, ist in Fig. 4 veranschaulicht. Diese wird eingestellt, wenn der Lkw bewegt wird oder kein Schnee bzw. keine Eisbildung zu erwarten sind.

Wird der Lkw nun geparkt und es sind Niederschläge vorhergesagt, kann der Fahrer durch Ziehen an dem Zugseil 6 das Rollo in die in Fig. 5 gezeigte Position ausziehen. Hierbei bedeckt der Behang 11 die ihm zugedachte Hälfte der Dachfläche 3 vollständig (siehe auch Fig. 2 und 3 mittiges Rollo). Fällt in der Folge Schnee, sammelt sich dieser auf dem Behang 11 an, wie in Fig. 6 veranschaulicht. In Fig. 6 ist auch der weitere Haken 13 dargestellt, an welchem das Rollo über das Seil 6 in der Betriebsstellung gehalten ist.

Zum Reinigen der Dachfläche, kann das Rollo nun weiter nach unten ausgezogen werden, wobei das Tuch über eine Umlenkrolle 12 um die Dachkante 14 geführt ist, so dass es durch diesen Vorgang nicht beschädigt werden kann. Ein weiterer Haker. 13 (siehe Fig. 7) dient dazu, dass Rollo in dieser Stellung zu befestigen. In der Regel wird die größte Menge des Schneebelags bereits durch das Herabziehen des Behangs 11 abfallen, ggf. kann der Fahrer aber verbleibende Schnee- und Eisreste in dieser Position leicht manuell entfernen.

Der Behang 11 kann aus geeigneten Folien, Planen oder Textilgeweben bestehen und ggf. mit einer Anti-Haft-Beschichtung versehen sein, um das Lösen von Schnee und Eis zu vereinfachen. Die gesamte Vorrichtung ist so ausgebildet, dass im Sommer die Rollos 4 vollständig entfernt werden können, so dass sie schonend eingelagert werden können und nicht unnötig verschleißen.

## Patentansprüche

1. Schnee- und Eisräumvorrichtung für die Dachfläche von Kraftfahrzeugen, **dadurch gekennzeichnet, dass** die Vorrichtung wenigstens ein Rollo (4) aufweist, dessen Behang (11) über die Dachfläche (7) ausfahrbar ist.

2. Schnee- und Eisräumvorrichtung nach Anspruch 1, **dadurch gekennzeichnet, dass** das Rollo (4) eine Wickelvorrichtung aufweist, deren Drehachse parallel zur Fahrzeuglängsrichtung ausgerichtet ist.

3. Schnee- und Eisräumvorrichtung nach Anspruch 1 oder 2, **dadurch gekennzeichnet, dass** das wenigstens eine Rollo (4) mit einer Rückholfeder versehen ist, die bestrebt ist, den Behang (11) in seine eingerollte Position zurückzuziehen.

4. Schnee- und Eisräumvorrichtung nach einem der Ansprüche 1 bis 3, **dadurch gekennzeichnet, dass** die Ausfahrlänge des Behangs (11) des wenigstens einen Rollos wenigstens das Doppelte der von ihm bedeckbaren Dachbreite beträgt.

5. Schnee- und Eisräumvorrichtung nach einem der vorhergehenden Ansprüche, **dadurch gekennzeichnet, dass** wenigstens zwei Rollos (4) mittig auf der Dachfläche (7) mit entgegengesetzter Ausfahrrichtung vorgesehen sind.

6. Schnee- und Eisräumvorrichtung nach einem der vorhergehenden Ansprüche, **dadurch gekennzeichnet, dass** an den seitlichen Dachkanten (14) Umlenkeinrichtungen (12) vorgesehen sind, die den Behang (11) über die Kanten (14) führen.

7. Schnee- und Eisräumvorrichtung nach Anspruch 6, **dadurch gekennzeichnet, dass** an den Dachkanten (14) Umlenkrollen oder -walzen oder abgerundete Gleitflächen vorgesehen sind.

8. Schnee- und Eisräumvorrichtung nach einem der vorhergehenden Ansprüche, **dadurch gekennzeichnet, dass** ein jeweils an einem freien Ende eines Behangs (11) vorgesehener Stab (15) unmittelbar oder mittels eines an ihm angebrachten Seiles (6) und einem Haken (13) am Fahrzeug wenigstens in einer Position im Bereich einer Dachkante (14) arretierbar ist.

9. Schnee- und Eisräumvorrichtung nach Anspruch 8, **dadurch gekennzeichnet, dass** der Stab (15) mittels einer Seilzugvorrichtung (6) manuell oder motorisch verstellbar ist.

10. Schnee- und Eisräumvorrichtung nach einem der vorhergehenden Ansprüche, **dadurch gekennzeichnet, dass** der Behang (11) des Rollos aus einer Folie, Plane oder einem Textilgewebe besteht.

11. Schnee- und Eisräumvorrichtung nach Anspruch 10, **dadurch gekennzeichnet, dass** der Behang (11) des Rollos (4) an der Auflageseite des Schnees und/oder auf seiner Unterseite eine Antihaftbeschichtung aufweist.

12. Schnee- und Eisräumvorrichtung nach einem der vorhergehenden Ansprüche, **dadurch gekennzeichnet, dass** eine Blende (5) oder ein Gehäuse zur Abdeckung des wenigstens einen Rollos (4) vorgesehen ist.

13. Schnee- und Eisräumvorrichtung nach Anspruch 12, **dadurch gekennzeichnet, dass** der Stab (15) im eingefahrenen Zustand eine Gehäuseöffnung verschließt, durch die der Behang geführt ist.

14. Schnee- und Eisräumvorrichtung nach einem der Ansprüche 8 bis 13, **dadurch gekennzeichnet, dass** der Stab (15) mit einer Schneeräumeinrichtung auf der Dachfläche aufliegt.
